# EUROPEAN PATENT APPLICATION

(11) **EP 2 403 314 A1**
(43) Date of publication of application: **04.01.2012**
(21) Application number: 10290348.1
(22) Date of filing: 29.06.2010
(51) Int. Cl.: H04W 88/08

(54) **Radio head device and method of operating a radio head device**

(71) Applicant: Alcatel Lucent, 75008 Paris (FR)
(72) Inventor: Wiegner, Dirk, 71409 Schwaikheim (DE); Templ, Wolfgang, Dr., 74372 Sersheim (DE)
(74) Representative: Dreiss

(57) **Abstract**

The invention relates to a radio head device (100) for receiving data from an external processing unit (12) and for transmitting data to at least one antenna (11a), wherein said radio head device (100) comprises a first interface (110) for receiving a digital signal (D) from said external processing unit (12), a digital signal processing device (120) for processing said digital signal (D) and putting out a processed digital signal (D1), a digital to analog, D/A, conversion unit (130) for converting said processed digital signal (D1) to an analog signal (A1), and an amplifier unit (140) for amplifying said analog signal (A1).

## Description

### Field of the invention

The present invention relates to a radio head device for receiving data from an external processing unit and for transmitting data to at least one antenna.

The present invention further relates to a method of operating a radio head device.

### Background

The radio coverage of a wireless communications system such as a cellular radio network is usually provided by several base stations each of which maintains wireless communications with one or more terminals via respective antennas. A base station comprises baseband processing means that perform baseband signal processing and put out at least one signal representative of data to be transmitted to the terminals.

In order to increase flexibility of the base stations, it is desirable to allow the antennas to be located remote from the baseband processing unit which has lead to the development of discrete radio head devices that receive data supplied by the baseband processing means and convert said data to a suitable form for transmission by an antenna.

It is an object of the present invention to provide an improved radio head device and an improved method of operating a radio head device which enable a higher degree of flexibility regarding signal processing and transmission.

### Summary

According to the present invention, regarding the abovementioned radio head device, this object is achieved by said radio head device comprising a first interface for receiving a digital signal from said external processing unit, a digital signal processing device for processing said digital signal and putting out a processed digital signal, a digital to analog, D/A, conversion unit for converting said processed digital signal to an analog signal, and an amplifier unit for amplifying said analog signal.

The configuration of the radio head device according to an embodiment advantageously enables sophisticated signal processing directly in the radio head device and thus eliminates the need for complex signal processing facilities in the external processing unit, e.g. a baseband processing unit of a base station associated with the radio head device.

According to an embodiment, the digital signal processing unit is configured to predistort the digital signal received from the baseband processing unit, which enables to provide an output signal to an antenna comprising a high degree of linearity. Other processes of conditioning the received digital signal may also be performed by the digital signal processing unit of the radio head device.

According to a further embodiment, a feedback path is provided which is configured to feed back a feedback signal that depends on an output signal of said amplifier unit to said digital signal processing device. Said feedback path enables to provide information to the signal processing unit which is required for specific processes of predistortion of the digital signal. For instance, said feedback signal may comprise information on non-linearity of the amplified signal that have been introduced by the amplifier unit.

According to a further embodiment, said digital signal processing device comprises a digital signal processor, DSP, and/or an application specific integrated circuit, ASIC, and/or a field programmable gate array, FPGA.

According to a further embodiment, said amplifier unit comprises at least one of: a class-AB amplifier, a Doherty amplifier, an envelope tracking amplifier.

According to a further embodiment, said digital signal processing device is configured to convert said digital signal received from the external processing unit, i.e. a baseband processing unit of a base station, to a digital modulation format or data format, respectively, employed by said feedback path, so as to enable an efficient processing of said digital signal depending on said feedback signal.

For instance, the digital signal provided by the baseband processing unit may comprise a typical one-bit modulation scheme such as bandpass-delta-sigma, pulse length, a combination thereof. In contrast, the signal provided to the signal processing device of the radio head device by said feedback path may e.g. comprise a sequence of n-bit digital sample values such as obtained by a per se known A/D-conversion of the amplified signal or a downconverted portion of said amplified signal as obtained at the output of the amplifier unit.

According to a further embodiment, said feedback path comprises an analog to digital, A/D conversion unit for converting said analog signal to a digital signal.

A further solution to the object of the present invention is provided by a base station device according to claim 9. Said base station device comprises a baseband processing unit configured to put out at least one digital signal representative of data to be transmitted by said base station device and at least one radio head device according to the embodiments and at least one transmission link for connecting said baseband processing unit to at least one of said radio head devices.

A further solution to the object of the present invention is provided by a method of operating a radio head device according to claim 10. Said method comprises the following steps:
- receiving a digital signal from said external processing unit at a first interface,
- processing said digital signal by means of a digital signal processing device,
- putting out a processed digital signal,
- converting said processed digital signal to an analog signal by means of a digital to analog, D/A, conversion unit,
- amplifying said analog signal by means of an amplifier unit.

Further advantageous embodiments are given by the dependent claims.

### Brief description of the figures

Further features, aspects and advantages of the present invention are given in the following detailed description with reference to the drawings in which:
- Figure 1: depicts a schematic block diagram of a communications scenario involving a base station and two mobile terminals,
- Figure 2: depicts a simplified block diagram of a radio head device according to an embodiment,
- Figure 3: depicts a block diagram of a base station according to an embodiment, and
- Figure 4: depicts a simplified flow chart of a method of operating a radio head device according to an embodiment.

### Description of the Embodiments

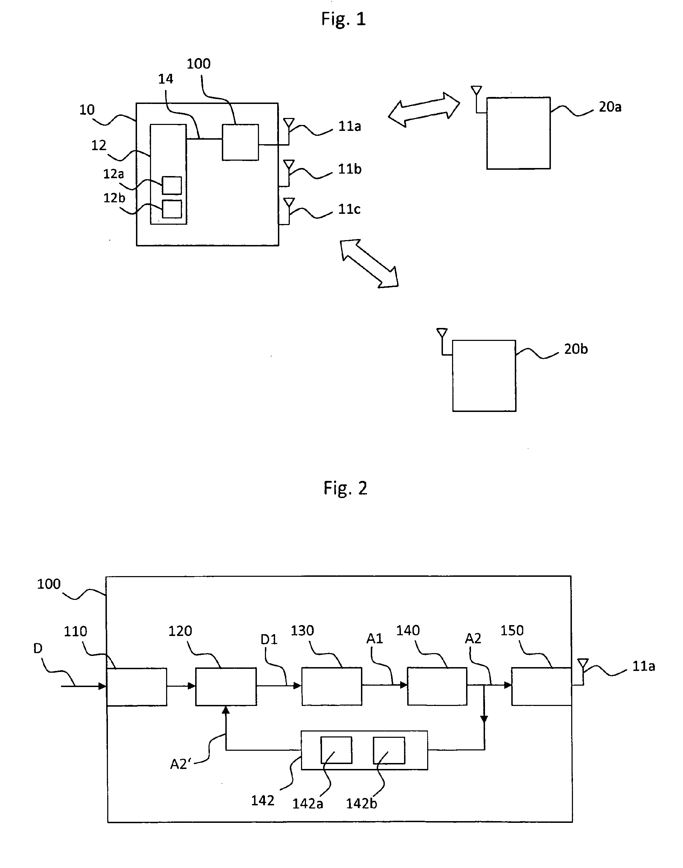

Figure 1 depicts a communications scenario involving a base station 10 of a cellular communications network and two mobile terminals 20a, 20b.

The base station 10 comprises a plurality of antennas 11a, 11b, 11c for exchanging radio frequency signals with corresponding antennas of the mobile terminals 20a, 20b in a per se known manner, e.g. such as according to one of the standards: GSM, UMTS, LTE. A central baseband processing unit 12 is provided in said base station 10 which performs basic baseband processing tasks such as signal creation, multi-carrier synthesis, clipping and the like.

A radio head device 100 is also comprised within the base station 10. The radio head device 100 is configured to receive data from the baseband processing unit 12 via a transmission link 14, to process said received data in a way disclosed in detail below, and to transmit processed data to at least one antenna 11a of said base station 10 for transmission to the terminals 20a, 20b. Generally, the radio head device 100 comprises processing capabilities that enable to transform the signals received from said baseband processing unit 12 into any form suitable for output to the antennas 11a, ..

It is to be noted that figure 1, particularly with respect to base station 10, merely illustrates a logical structure of base station 10 and not necessarily a physical arrangement of its components 11a, 11b, 11c, 12, 14, 100.

Preferably, the various components 11a, 11b, 11c, 12, 14, 100 of the base station 10 are arranged at different locations, i.e. remote from each other. A particularly preferred configuration provides the baseband processing unit 12 to be located at a first location, such as a utility room of a building or the like. The further components 100, 11a, 11b, 11c are preferably located remote from said baseband processing unit 12, for instance on the top of a roof of the same building. It is also possible to arrange the radio head device 100 and its associated antennas 11a, 11b, 11c even further away from the baseband processing unit 12 such as e.g. in another building or even some kilometres away from the first location of the baseband processing unit 12.

For this purpose, in order to facilitate robust and high data rate signal transmission from the baseband processing unit 12 to the radio head device 100, the transmission link 14 is designed as a digital transmission link. I.e., a digital data format is used for data transmission from the baseband unit 12 to the radio head device 100. According to a preferred embodiment, a 1-bit digital modulation scheme is used for transmitting data via said transmission link. For instance, the digital signal provided by the baseband processing unit 12 may comprise a typical one-bit modulation scheme such as bandpass-delta-sigma, pulse length, a combination thereof or other schemes known in the art. Although transmission link 14 may comprise electrical conductors and cables made thereof, a further particularly preferred variant for the transmission link 14 is an optical transmission link comprising one or more optical fibers. Combined electric and optical transmission links may also be provided.

Thus, according to an exemplary embodiment, the baseband processing unit 12 comprises a 1-bit modulator 12a (figure 1) and electro-optical conversion means 12b which supply a digital optical signal to the optical transmission link 14. This digital optical signal is representative of data to be transmitted by said base station 10 to the terminals 20a, 20b and may correspondingly comprise one or more respective data streams.

Accordingly, the radio head device 100, which may be arranged remotely from the baseband processing unit 12, receives the digital optical signal transmitted by the baseband processing means 12 via said transmission link 14. Generally, the transmission link 14 advantageously enables placement of the radio head device 100 remote from said baseband processing unit 12 due to its low loss and robustness.

Figure 2 depicts a schematic block diagram of a radio head device 100 according to an embodiment. As can be gathered from figure 2, the radio head device 100 comprises an optical input port 110 that is configured to receive a digital optical signal D that is transmitted by the base band processing unit 12 (figure 1) via said link 14 to the radio head device 100 in the above explained manner. Alternatively, if the transmission link is of the electrical type, the input port is configured respectively.

According to a preferred embodiment, the optical interface 110 is also configured to perform a conversion of the received digital optical signal D to the electrical domain, i.e. to convert the digital optical signal D to a digital electrical signal, which is performed in a per se known manner by opto-electric conversion means (not shown) integrated into said interface 110.

After the optical to electrical conversion, the obtained digital electrical signal is forwarded to a digital signal processing device 120 which is configured to perform processes of digital signal processing of the digital signal D.

Thus, at an output of the digital signal processing device 120, a correspondingly processed digital signal D1 is obtained, which is forwarded to a digital to analog D/A, conversion unit 130 which converts said processed digital signal D1 to an analog signal A1 in a per se known manner. The analog signal A1 is subsequently amplified by an amplifier unit 140, and the amplified analog signal A2 obtained at an output of the amplifier unit 140 is forwarded to an antenna interface 150 which connects the radio head device 100 to the antenna 11a.

Preferably, the radio head device 100 and the antenna 11a are co-located, i.e. on the top of a roof of a building, whereas the baseband processing unit 12 of the base station 10 (figure 1) may be located remote from the components 10, 11a.

The components 110, .., 150 explained above define a transmitting path as seen from the base station 10. However, the base station 10 or the radio head device 100 may also comprise further components (not shown) which define a receiving path for receiving signals from the terminals 20a, 20b. Such a receiver path may e.g. be connected to the antenna 11a by means of a duplexor unit that may also be integrated into the antenna interface 150 and serves to separate signals in a transmission direction (e.g., as supplied by amplifier unit 140) from signals in a receiving direction in a per se known manner.

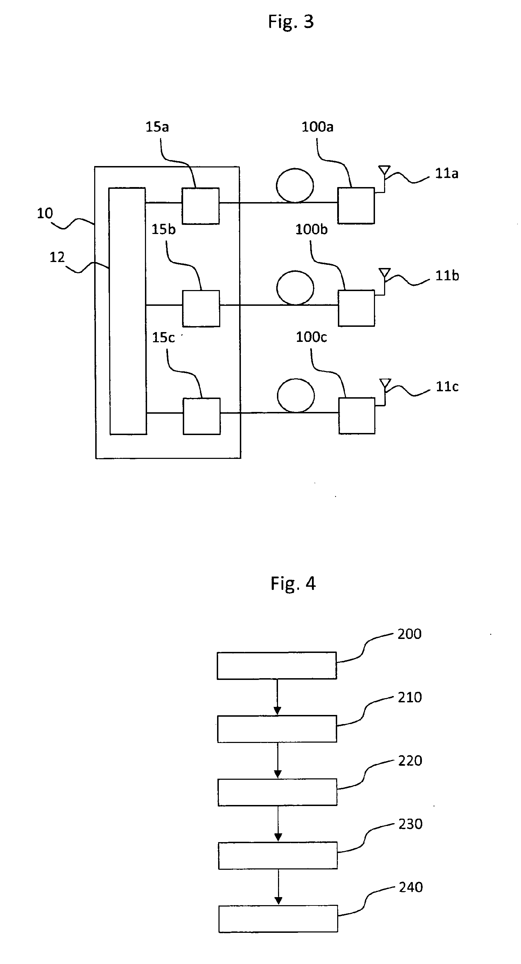

The flow chart of figure 4 illustrates an embodiment of a method of operating the radio head device 100 depicted by figure 2.

In a first step 200, the digital signal D is received from the baseband processing unit 12. Step 200 may also provide for a conversion of the received signal D from the optical to the electrical domain. After that, in step 210, said digital signal D is processed by the digital signal processing device 120, which yields a processed digital signal D1, that is put out to the D/A-converter 130 in step 220. In step 230, said processed digital signal D1 is converted to the analog domain yielding signal A1. Finally, in step 240, said analog signal A1 is amplified by amplifier unit 140. Advantageously, if necessary, the at least one of the signals D1, A1, A2 may be upconverted to a desired frequency range, such as e.g. a radio frequency (RF) range, suitable for output to the antenna 11a.

According to an embodiment, the digital signal processing unit 120 of the radio head device 100 is configured to predistort the digital signal D received from the baseband processing unit 12, which enables to provide an output signal A2 to the antenna 11a comprising a high degree of linearity. For instance, predistortion may be performed so as to compensate non-linearity introduced in the course of processing the processed digital signal D1 by means of the components 130, 140, particularly by the amplifier 140.

Other processes of conditioning the received digital signal D may also be performed by the digital signal processing unit 120 of the radio head device 100.

According to a further embodiment, a feedback path 142 is provided within said radio head device 100 which is configured to feed back a feedback signal A2' that is derived from and thus depends on the output signal A2 of said amplifier unit 140. As can be gathered from figure 2, the feedback signal A2' is fed back to the digital signal processing device 120, which is configured to perform signal processing, e.g. of the received digital signal D, depending on said feedback signal A2'.

Said feedback path 142 advantageously enables to provide information to the signal processing unit 120 which is required for specific processes of predistortion of the digital signal D, particularly for efficient linearization or compensation of non-linearity introduced in the course of processing the processed digital signal D1 by means of the components 130, 140, particularly by the amplifier 140. For instance, said feedback signal A2' may be identical to said amplified signal A2 or may generally comprise information on non-linearity of the amplified signal A2 that have been introduced by the amplifier unit 140 or other devices in the processing chain.

According to a further embodiment, said digital signal processing device 120 comprises at least one of: a digital signal processor, DSP, an application specific integrated circuit, ASIC, a field programmable gate array, FPGA or any combination thereof. Digital signal processing capabilities of the unit 120 may generally be provided by any suitable calculating means that is capable of processing digital signals D. Said digital signal processing device 120 may also be configured to process analog signals, i.e. by providing respective A/D conversion means. This way, the analog amplified signal A2 or a portion A2' thereof may directly be supplied to the unit 120 which can perform an A/D conversion and subsequently process the respective information of said signals A2, A2' in the digital domain.

According to a further embodiment, said feedback path 142 comprises an analog to digital, A/D, conversion unit 142a for converting said analog signal A2 to a digital signal A2' .

Generally, the digital signal processing device 120 according to the embodiments may be configured to be able to process baseband signals. In this case, the digital signal D that is provided to the radio head device 100 by the baseband processing means 12 may be a baseband signal. However, since signal transmissions via the antenna 11a to the terminals 20a, 20b require a radio frequency signal, a respective upconversion process which translates the processed digital baseband signals D1 or their analog counterpart A1 is required. According to an embodiment, upconversion may e.g. be performed in a per se known manner by an upconversion unit (not shown) which receives the analog signal A1 and converts it to a suitable RF band. Such upconversion unit may also be integrated in the amplifier unit 140. In both cases, the amplified signal A2 obtained at the output of amplifier unit 140 is an RF signal suitable for transmission by the antenna 11a.

To enable efficient feedback of a portion of the amplified signal A2 or a signal derived therefrom, a corresponding downconversion of signal A2 is provided by the downconversion unit 142b which is integrated into the feedback path 142 according to an embodiment. Generally, the downconversion may provide for a conversion of the RF type signal A2 to a baseband signal or to an intermediate frequency band, a frequency range of which is selected low enough to still enable A/D conversion and processing of a corresponding digital signal A2' supplied to the digital signal processing means 120.

Likewise, instead of receiving a digital baseband signal D, the digital signal processing means 120 may also be configured to receive a digital signal D having an intermediate frequency range such as e.g. some MHz or the like or even already a target frequency range suitable for transmission via the antenna 11a. In this case, the processing unit 12 (figure 1) is correspondingly configured to provide such digital intermediate frequency / target frequency signal instead of or additionally to a digital baseband signal. In this case, obviously, the feedback path 142 and its components 142a, 142b should also be configured to process intermediate frequency signals. Obviously, if the target frequency is sufficiently high and properly adapted to the antenna system 11a, no further frequency translation such as an upconversion is required prior to transmitting the respective signals via the antenna 11a.

According to a further embodiment, said digital signal processing device 120 is configured to convert said digital signal D received from the external processing unit 12, i.e. the baseband processing unit the base station 10 (figure 1), to a digital modulation format or data format, respectively, employed by said feedback path 142, so as to enable an efficient processing of said digital signal D depending on said feedback signal A2'.

For instance, the digital signal D provided by the baseband processing unit 12 may comprise a typical one-bit modulation scheme such as bandpass-delta-sigma, pulse length, a combination thereof. In contrast, the signal A2' provided to the signal processing device 120 of the radio head device 100 by said feedback path 142 may e.g. comprise a sequence of n-bit (e.g., n=8, 12, 14 or 16) digital sample values such as obtained by the A/D-conversion of the amplified signal A2 or a downconverted portion of said amplified signal A2 as obtained at the output of the amplifier unit 140.

According to a further embodiment, said amplifier unit 140 comprises at least one of: a class-AB amplifier, a Doherty amplifier, an envelope tracking amplifier.

According to another preferred embodiment, the amplifying means 140 may also comprise filter means (not shown) for properly reconstructing the amplified analog signal A2 to be forwarded to the antenna 11a.

Moreover, if an envelope tracking (ET-) amplifier is employed within the amplifying unit 140, a separate ET envelope path as well as further processing capabilities required by the ET amplifying principle (ET-modulator, time delay alignment and the like) may be provided in the signal processing arrangement depicted by figure 2. For example, an additional signal path (not shown) for the ET control may be provided between the processing means 120 and the amplifier unit 140 for the respective ET-specific control purposes.

According to a further embodiment a simplified logical structure of which is illustrated by figure 3, a base station 10 may also be assigned a plurality of radio head devices 100a, 100b, 100c, each of which is connected to a respective antenna 11a, 11b, 11c. Correspondingly, the processing means 12 of the base station 10 are configured to provide a digital signal D (figure 1) for each of the radio head devices 100a, 100b, 100c. For example, each of the three radio head devices 100a, 100b, 100c of figure 3 may be configured to provide radio coverage of said base station 10 for a distinct spatial sector.

As depicted by figure 3, each radio head device 100a, 100b, 100c is connected to the processing means 12 of the base station 10 by means of a separate optical transmission link. To supply these optical transmission links with respective digital optical signals, electro/optical conversion means 15a, 15b, 15c are provided.

As such, the radio head devices 100a, 100b, 100c associated with the different antennas 11a, 11b, 11c operate independently of each other. However, if there is a communications link (not shown) provided between the various radio head devices 100a, 100b, 100c, it is also possible to perform signal processing within a specific unit 120 of one 100a of the radio head devices for a plurality of said devices 100a, 100b, 100c.

Alternatively to the dedicated transmission links of Figure 3, a multiplexing architecture could also be provided to selectively connect a specific radio head device 100a with the baseband processing unit 12.

The provisioning of the digital processing unit 120 in the radio head device 100 according to the embodiments advantageously enables to perform sophisticated signal processing directly in the radio head device 100 and does not require corresponding processing capabilities to be provided in the usually remotely arranged baseband processing unit 12.

Especially for predistortion purposes, i.e. steps of increasing linearity of the output signal A2 of the amplifier 140, it is advantageous to digitally process the respective data directly within the radio head device 100. Thus, it is possible to fully integrate the feedback path 142 into the radio head device 100. In contrast, conventional systems which utilize feedback data for predistortion purposes would have to transmit feedback signals back from the radio head device 100 via a separate data link to the remote base band processing unit 12 which is prone to error and increases overall costs.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Radio head device (100) for receiving data from an external processing unit (12) and for transmitting data to at least one antenna (11a), wherein said radio head device (100) comprises a first interface (110) for receiving a digital signal (D) from said external processing unit (12), a digital signal processing device (120) for processing said digital signal (D) and putting out a processed digital signal (D1), a digital to analog, D/A, conversion unit (130) for converting said processed digital signal (D1) to an analog signal (A1), and an amplifier unit (140) for amplifying said analog signal (A1)..

2. Radio head device (100) according to claim 1, wherein said digital signal processing device (120) is configured to predistort said digital signal (D).

3. Radio head device (100) according to one of the preceding claims, wherein a feedback path (142) is provided which is configured to feed back a feedback signal (A2') that depends on an output signal (A2) of said amplifier unit (140) to said digital signal processing device (120).

4. Radio head device (100) according to one of the preceding claims, wherein said digital signal processing device (120) comprises a digital signal processor DSP, and/or an application specific integrated circuit ASIC, and/or a field programmable gate array, FPGA.

5. Radio head device (100) according to one of the preceding claims, wherein said amplifier unit (140) comprises at least one of: a class-AB amplifier, a Doherty amplifier, an envelope tracking amplifier.

6. Radio head device (100) according to one of the claims 3 to 5, wherein said digital signal processing device (120) is configured to convert said digital signal (D) to a digital modulation format employed by said feedback path (142).

7. Radio head device (100) according to one of the claims 3 to 6, wherein said digital signal processing device (120) is configured to process said digital signal (D) depending on said feedback signal (A2').

8. Radio head device (100) according to one of the claims 3 to 7, wherein said feedback path (142) comprises an analog to digital, A/D conversion unit (142a) for converting said analog signal (A2) to a digital signal.

9. Base station device (10) comprising a baseband processing unit (12) configured to put out at least one digital signal (D) representative of data to be transmitted by said base station device (10), said base station device (10) further comprising at least one radio head device (100a, 100b, 100c) according to one of the preceding claims and at least one transmission link for connecting said baseband processing unit (12) to at least one of said radio head devices (100a, 100b, 100c).

10. Method of operating a radio head device (100) for receiving data from an external processing unit (12) and for transmitting data to at least one antenna (11a), comprising the following steps:
- receiving (200) a digital signal (D) from said external processing unit (12) at a first interface (110),
- processing (210) said digital signal (D) by means of a digital signal processing device (120),
- putting out (220) a processed digital signal (D1),
- converting (230) said processed digital signal (D1) to an analog signal (A1) by means of a digital to analog, D/A, conversion unit (130),
- amplifying (240) said analog signal (A1) by means of an amplifier unit (140).

11. Method of operating a radio head device (100) according to claim 10, wherein said digital signal processing device (120) applies a predistortion to said digital signal (D).

12. Method of operating a radio head device (100) according to one of the claims 10 to 11, wherein said processing (210) is performed depending on a feedback signal (A2') from a feedback path (142) which is configured to feed back a signal (A2') that depends on an output signal (A2) of said amplifier unit (140) to said digital signal processing device (120).

13. Method of operating a radio head device (100) according to claim 12, wherein said digital signal processing device (120) converts said digital signal (D) to a digital modulation format employed by said feedback path (142).

14. Method of operating a radio head device (100) according to claim 12 or 13, wherein said feedback path (142) performs a downconversion of said output signal (A2) to a lower frequency range.
